# DEMANDE DE BREVET EUROPEEN

(11) **EP 1 168 695 A1**
(43) Date de publication de la demande: **02.01.2002**
(21) Numéro de dépôt: 01401642.2
(22) Date de dépôt: 21.06.2001
(51) Int. Cl.: H04J 3/14, H04J 14/02

(54) **Réseau sous-marin de transmissions par fibre optique**

(30) Priorité: 22.06.2000 FR 0008013
(71) Demandeur: ALCATEL, 75008 Paris (FR)
(72) Inventeur: Mathieu, Christophe, 92350 Le Plessis Robinson (FR); Le Gall, Loic, 92160 Antony (FR); Lemaire, Vincent, 91120 Palaiseau (FR)
(74) Mandataire: Lamoureux, Bernard

(57) **Abrégé**

L'invention propose un réseau sous-marin de transmission par fibres optique, comprenant un câble unique (1) avec au moins deux paires de fibres et ayant à chaque extrémité une unité de branchement (6, 8); chaque unité de branchement est reliée à des équipements terminaux (18-21, 22-25) par deux sections de câble (10, 12, 14, 16) ayant chacune au moins deux paires de fibres. Chaque unité de branchement commute les paires de fibres du câble unique vers deux paires de fibres des deux sections de câble qui lui sont reliées.

L'invention permet de simplifier la structure du réseau, tout en préservant une configuration en anneau permettant la restauration du trafic par les mécanismes de la hiérarchie numérique synchrone.

## Description

L'invention concerne le domaine des transmissions par fibre optique, et plus particulièrement les réseaux de transmissions sous-marins à multiplexage en longueur d'onde à haut débit. On qualifie de "haut débit" les débits au-delà de 155 Mbit/s.

Les réseaux sous-marins de transmissions par fibre optique sont conçus de manière à présenter une résistance aux incidents aussi élevée que possible. Les incidents peuvent être de diverses origines - électrique et surtout optique dans les répéteurs, mécanique du fait de la destruction locale du câble sous-marin, ou autres. Le but recherché est d'assurer pour un coût réduit une protection du trafic contre certains types d'incidents.

La hiérarchie numérique synchrone (en anglais "Synchronous Digital Hierarchy" ou SDH) propose une mise en forme du trafic par encapsulation dans des trames, avec des mécanismes de protection.

Un mécanisme de protection appelé 4f Ms SPRing Transoceanic application (acronyme de l'anglais "4-fiber multiplex section section protection ring") est décrit dans la recommandation ITU G.841. Ce mécanisme de protection met en oeuvre un routage des signaux vers une fibre de secours en cas de problème sur une fibre de ligne; il nécessite sur le plan physique deux paires de fibres en anneau, pour une transmission unidirectionnelle. Il a donc déjà été proposé des réseaux sous-marins de transmission par fibre optique, avec une topologie en anneau, comportant deux paires de fibres pour chaque direction de transmission. On peut dans ce cas pallier un incident sur un segment de l'anneau reliant deux points trouver une route physique différente pour relier les deux points. Des dispositifs de commutation utilisant les principes de la SDH ont été développés.

L'invention propose une solution au problème de la protection contre les incidents dans les réseaux sous-marins de transmission en multiplexage en longueur d'onde. Elle propose une solution qui permet une meilleure utilisation des ressources physiques et qui garantit une protection d'au moins une partie du trafic avec une restauration rapide en cas d'incident. Elle permet une restauration moins rapide pour le reste du trafic. L'invention est facilement implémentable en utilisant des dispositifs de commutation existants.

Plus précisément, l'invention propose un réseau sous-marin de transmission par fibres optique, comprenant un câble unique avec au moins deux paires de fibres et ayant à chaque extrémité une unité de branchement, chaque unité de branchement étant reliée à des équipements terminaux par deux sections de câble ayant chacune au moins deux paires de fibres, chaque unité de branchement commutant les paires de fibres du câble unique vers deux paires de fibres des deux sections de câble qui lui sont reliées.

Dans un mode de réalisation de l'invention, chaque équipement terminal est relié à une paire de fibre, et le réseau présente, du côté d'une extrémité du câble unique, un multiplexeur relié par une paire de fibres à un équipement terminal d'une section de câble, et par une autre paire de fibres à un équipement terminal de l'autre section de câble.

Il est avantageux dans ce cas que le multiplexeur présente quatre accès.

De préférence, le multiplexeur est un multiplexeur d'injection et d'extraction à hiérarchie numérique synchrone.

On peut encore prévoir, du côté d'une extrémité du câble unique, un deuxième multiplexeur relié par une fibre à un autre équipement terminal d'une section de câble, par une autre fibre à un équipement terminal de l'autre section de câble et par une fibre à un accès du dit multiplexeur.

Dans ce cas, il est encore avantageux que le deuxième multiplexeur soit un multiplexeur d'injection et d'extraction à hiérarchie numérique synchrone.

On peut encore prévoir, du côté d'une extrémité du câble unique, un troisième multiplexeur relié par une fibre à un autre équipement terminal d'une section de câble, par une autre fibre à un équipement terminal de l'autre section de câble et par une fibre à un autre accès du dit multiplexeur.

Dans ce cas, il est avantageux que le troisième multiplexeur soit un multiplexeur d'injection et d'extraction à hiérarchie numérique synchrone.

L'invention concerne aussi un procédé de transmission dans un tel réseau, comprenant, d'un côté du câble unique,
- la transmission d'un trafic à restauration rapide depuis un accès du multiplexeur à travers un équipement terminal, une section de câble, une unité de branchement vers le câble unique, et
- la réception d'un trafic à restauration rapide sur un accès du multiplexeur depuis le câble unique à travers l'unité de branchement, l'autre section de câble et un équipement terminal.
   On peut aussi prévoir, d'un côté du câble unique,
- la transmission d'un trafic à restauration lente depuis un accès du deuxième multiplexeur à travers le multiplexeur, un équipement terminal, une section de câble, une unité de branchement vers le câble unique, et
- la réception d'un trafic à restauration lente sur un accès du troisième multiplexeur depuis le câble unique à travers l'unité de branchement, l'autre section de câble, un équipement terminal et le multiplexeur.
   En cas d'incident, le procédé comprend de préférence, d'un côté du câble unique,
- la transmission d'un trafic à restauration rapide depuis un accès du multiplexeur à travers un équipement terminal, une section de câble, une unité de branchement vers le câble unique, et
- la réception d'un trafic à restauration rapide sur un accès du multiplexeur depuis le câble unique à travers l'unité de branchement, la même section de câble et le même équipement terminal.
   On peut encore prévoir, en cas d'incident, d'un côté du câble unique,
- la transmission d'un trafic à restauration lente depuis un accès du deuxième multiplexeur à travers un équipement terminal, une section de câble, une unité de branchement vers le câble unique, et
- la réception d'un trafic à restauration lente sur un accès du troisième multiplexeur depuis le câble unique à travers l'unité de branchement, la même section de câble et le même équipement terminal.
   D'autres caractéristiques et avantages de l'invention apparaîtront à la lecture de la description qui suit de modes de réalisation de l'invention, donnés à titre d'exemple et en référence aux dessins annexés, qui montrent
- figure 1, une représentation schématique d'un réseau de transmission selon l'invention;
- figure 2, une représentation schématique d'une partie du réseau de la figure 1, montrant la restauration du trafic rapide en cas d'incident;
- figure 3, une représentation schématique d'une partie du réseau de la figure 1, montrant la restauration du trafic lent en cas d'incident.

L'invention propose d'une part une topologie de réseau, et d'autre part des mécanismes de récupération pour cette topologie de réseau. Pour ce qui est de la topologie, l'invention repose sur la constatation que les incidents de nature mécanique dans les réseaux sous-marins de transmission ont essentiellement lieu en eaux peu profondes; par rapport à une topologie de réseau connue en anneau, elle propose donc de n'utiliser qu'un câble unique, dans la partie centrale du réseau de transmission, i. e. pour les eaux profondes. Le câble unique présente à chaque extrémité une unité de branchement à commutation de fibre, et le réseau de l'invention peut donc présenter de part et d'autre du câble unique la même topologie que dans l'état de la technique. Par rapport à une topologie en anneau, la topologie de l'invention permet de simplifier le réseau, et notamment d'éviter la pose en eaux profondes de deux câbles distincts.

Pour la récupération du trafic, l'invention propose de séparer le trafic en deux parties. Une première partie, qualifiée dans la suite de "trafic rapide", "trafic à restauration rapide", ou "trafic FR" (pour l'anglais "Fast Recovery"), est susceptible d'être restaurée ou réacheminée rapidement en cas d'incident; une deuxième partie, qualifiée dans la suite de "trafic lent" ou "trafic à restauration lente" ou "trafic SR" (pour l'anglais "Slow Recovery") est susceptible d'être restaurée ou réacheminée en cas d'incident, mais moins rapidement que le trafic FR. La signification exacte des termes "rapide" et "lent" apparaîtra plus précisément dans la suite de la description : brièvement, la restauration dans le cas du trafic rapide repose exclusivement sur les mécanismes SDH, tandis que la restauration dans le cas du trafic lent implique une commutation d'une unité de branchement à commutation de fibre. En aucun cas les qualificatifs de "lent" et "rapide" ne se réfèrent à la vitesse de transmission, mais au contraire à la vitesse de récupération ou restauration en cas d'incident.

La combinaison de la topologie du réseau et de la séparation du trafic permet une meilleure utilisation des ressources physiques que dans l'état de la technique, tout en préservant la capacité du réseau à restaurer l'ensemble du trafic en cas d'incident.

Dans la suite de la description, l'invention est décrite dans la configuration la plus simple, dans laquelle le réseau ne comprend que deux paires de fibres. L'homme du métier comprend que cette configuration peut être répliquée pour augmenter les capacités de transmission du réseau.

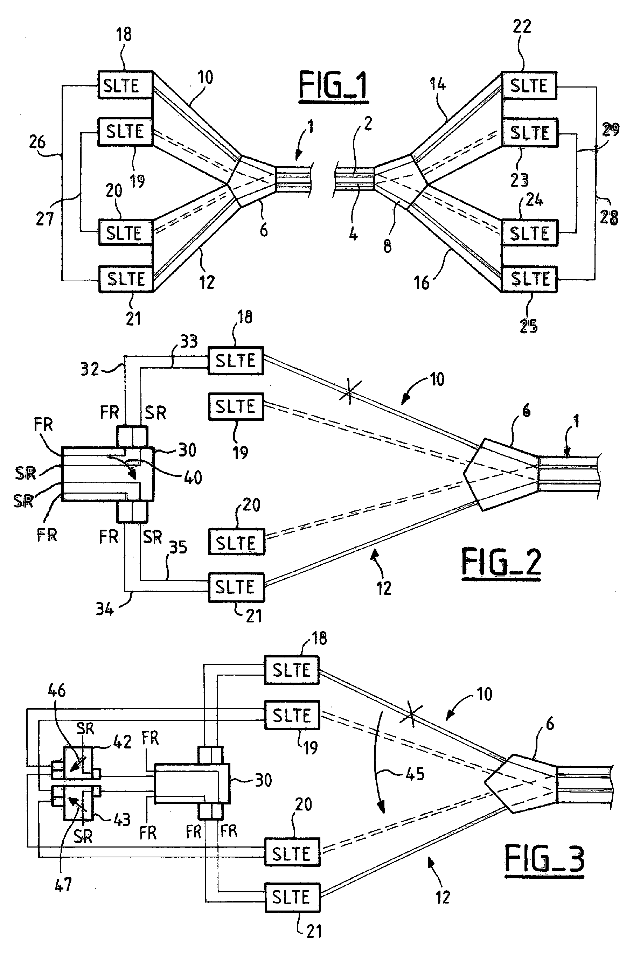

La figure 1 montre une représentation schématique d'un réseau de transmission selon l'invention. Comme expliqué plus haut, le réseau présente une topologie correspondant à un anneau avec un câble unique dans la partie centrale. La figure montre donc la partie centrale du réseau, qui comprend un câble unique 1, soit donc deux paires 2 et 4 de fibres optiques. Chaque paire permet une transmission bidirectionnelle. Le câble unique correspond de préférence aux eaux profondes; on entend par "eaux profondes" les profondeurs auxquelles un incident mécanique sur le réseau est peu probable. Des profondeurs supérieures à 200 m sont un exemple, la probabilité d'incident de nature mécanique étant alors faible.

A chaque extrémité, le câble unique 1 présente une unité de branchement 6 ou 8. Chaque unité de branchement 6 (respectivement 8) est capable d'effectuer une commutation de fibre entre d'une part les paires de fibres du câble unique, et d'autre part les paires de fibres de l'une ou l'autre de deux sections de câble 10 et 12 (respectivement 14 et 16). Chaque section de câble 10 ou 12 (respectivement 14 ou 16) relie l'unité de branchement 6 (respectivement 8) et une paire d'équipements terminaux d'atterrissage sous-marin (ou SLTE pour l'anglais "Submarine Landing Terminal Equipment") 18, 19 ou 20 et 21 (respectivement 22 et 23 ou 24 et 25). Chaque équipement terminal est relié à une paire de fibre. Ces paires d'équipements sont reliées entre elles sur terre par des liaisons terrestres 26 et 27 ou 28 et 29, de sorte à fermer l'anneau.

En fonctionnement normal, l'unité de branchement 6 (respectivement 8) couple respectivement les paires du câble unique 1 vers une paire de chacune des sections de câble 10 et 12 (respectivement 14 et 16); cette configuration est représentée sur la figure, et dans chaque section de câble la paire couplée à une paire du câble unique est représentée en traits pleins, tandis que l'autre paire est représentée en traits interrompus. Dans une section de câble, la paire en traits pleins est aussi qualifiée dans la suite de "paire active", tandis que la paire en traits interrompus est qualifiée de "paire passive" ou de secours. En cas d'incident sur une des sections de câble, l'unité de branchement peut coupler les paires du câble unique vers les paires d'une des deux sections de câble.

En configuration normale, le réseau forme un anneau d'une paire de fibres; partant de la paire de fibres 2 du câble unique, on parcourt l'anneau dans le sens inverse des aiguilles d'une montre en passant par l'unité de branchement 6, la section de câble 10, l'équipement 18, la liaison terrestre 26, l'équipement 21, la section de câble 12, l'unité de branchement 6, la deuxième paire de fibres 4 du câble unique, l'unité de branchement 8, la section de câble 16, l'équipement 25, la liaison terrestre 29, l'équipement 22, la section de câble 14, l'unité de branchement 8, et de nouveau la paire de fibres 2. Comme expliqué dans la suite, cette configuration en anneau est préservée en cas d'incident.

La figure 2 est une représentation schématique d'une partie du réseau de la figure 1, montrant la restauration du trafic rapide en cas d'incident; comme expliqué plus haut, on suppose que l'incident survient dans une section de câble reliant une unité de branchement et une paire d'équipements terminaux. On n'a représenté donc sur la figure 2 que la partie du réseau se trouvant du côté de l'incident par rapport au câble unique 1. L'invention repose, pour la restauration du trafic rapide, sur l'utilisation dans la topologie particulière décrite à la figure 1 des mécanismes de restauration déjà connus, tels que ceux présents dans la SDH.

On reconnaît sur la figure 2 des éléments déjà décrits, notamment l'unité de branchement 6, les sections de câble 8 et 10 et les équipements 18 à 21. Apparaît sur la figure 2 un multiplexeur qui permet la mise en oeuvre des mécanismes de restauration SDH. Le multiplexeur 30 ou ADM SDH (acronyme de l'anglais "Add Drop Multiplexer" multiplexeur d'injection et d'extraction) est relié par des agrégats SDH à deux fibres 32, 33 à l'équipement terminal 18 relié à la paire de fibres active sur la section de câble 18, et est relié par deux fibres 34, 35 à l'équipement terminal 21 relié à la paire de fibres active de la section de câble 12. Le multiplexeur 30 présente quatre accès ou tributaires (de l'anglais "tributary"), à savoir deux accès pour le trafic rapide, marqué FR sur la figure 2, et deux accès pour le trafic lent, marqués SR sur la figure 2. Les deux accès pour le trafic rapide sont des accès clients; les deux accès pour le trafic lent sont décrit plus en détail en référence à la figure 3. En mode de fonctionnement normal, le trafic rapide est acheminé sur une fibre entre les équipements terminaux 18 ou 21 et l'ADM 30, tandis que le trafic lent est acheminé sur l'autre fibre : ainsi les accès FR sont respectivement reliés aux équipements 18 et 21; il en est de même pour les accès SR. Plus spécifiquement, dans l'exemple de la figure, un accès FR est relié à l'équipement 18 par la fibre 32, l'autre étant relié à l'équipement 21 par la fibre 34. De façon similaire, un accès SR est relié à l'équipement 18 par la fibre 33, l'autre étant relié à l'équipement 21 par la fibre 35. L'état de fonctionnement normal de l'ADM SDH 30 est représenté en traits fins sur la figure. Les volumes possibles de trafic à restauration rapide et de trafic à restauration lente sont donc de préférence voisins, de sorte à optimiser l'occupation des fibres dans le réseau.

En cas d'incident, l'ADM SDH 30 peut utiliser les mécanismes de restauration de la SDH mentionnés plus haut pour assurer l'acheminement du trafic rapide, au détriment du trafic lent. Supposons à titre d'exemple que le trafic un incident sur la section de câble 10, entre l'équipement 18 et l'unité de branchement 6. Dans ce cas, le trafic rapide transitant par la fibre 32 et l'équipement 18 ne peut plus passer par la section de câble 10. Par application des mécanismes SDH, l'accès FR auparavant relié à la fibre 32 est alors relié à la fibre 35, comme le montre la flèche 40 de la figure 2. Ainsi, le trafic rapide est routé dans l'ADM SDH non plus depuis vers la fibre 32, mais au contraire vers la fibre 35, qui servait auparavant pour le trafic lent. Le trafic lent est alors préempté par le trafic rapide, de telle sorte que le trafic rapide est immédiatement rerouté à travers l'équipement 21 puis la section de câble 12 vers l'unité de branchement 6, et ainsi de suite. On constate ici que la configuration de l'invention permet une récupération du trafic rapide en cas d'incident à la vitesse qu'autorise la SDH mise en oeuvre dans l'ADM SDH 30; la configuration en anneau est préservée pour le trafic rapide. Le trafic lent est préempté, avant d'être restauré comme le montre la figure 3.

Le trafic à restauration lente peut aussi être rerouté, comme le montre la figure 3. Cette figure montre non seulement les éléments déjà décrits plus haut en ce qui concerne le trafic rapide, mais encore les éléments nécessaires à la restauration du trafic lent. Ces éléments comprennent deux multiplexeurs ou ADM SDH 42 et 43. L'ADM 42 est relié à un accès SR de l'ADM 30; il est aussi relié d'une part à l'équipement 19, et d'autre part à l'équipement 20, par deux agrégats SDH. L'ADM 42 présente par ailleurs un accès client pour le trafic à restauration lente, qui est marqué SR sur la figure 3. De façon similaire, l'ADM 43 est relié à l'autre accès SR de l'ADM 30, ce qui est représenté sur la figure; il est aussi relié d'une part à l'équipement 19, et d'autre part à l'équipement 20 par deux agrégats SDH, tout comme l'ADM 42. Il présente, tout comme l'ADM 42, un accès client pour le trafic lent, qui est aussi marqué SR sur la figure 3.

En mode de fonctionnement normal, le trafic lent provenant de l'accès client de l'ADM 42 est routé vers l'accès SR de l'ADM 30, puis vers l'équipement 18 à travers la fibre 33. De même, le trafic lent provenant de l'accès client de l'ADM 43 est routé vers l'accès SR de l'ADM 30, puis vers l'équipement 21 à travers la fibre 35. On a bien en mode de fonctionnement normal une configuration en anneau. En cas d'incident, comme dans l'exemple de la figure 2, le trafic lent routé par l'équipement 18 ne passe plus dans la section de câble 10. Le trafic lent routé par l'équipement 21 à travers l'ADM 43, l'ADM 30 et la fibre 35 est préempté pour assurer la restauration du trafic rapide.

Le trafic à restauration lente est restauré comme expliqué maintenant. Tout d'abord, comme le montre la flèche 45, on procède à une commutation de fibre dans l'unité de branchement 6, de sorte à commuter vers la paire passive de la section de câble 12 la paire de fibres du câble unique 1 auparavant couplée à la paire active de la section de câble 10. Ensuite, comme le montre la flèche 46, l'accès client SR dans l'ADM 42 est routé vers l'équipement 20, puis vers l'unité de branchement à travers la paire passive - qui ne l'est plus - de la section de câble 12. Dans l'ADM 43, l'accès client SR est aussi relié à l'équipement 20, comme le montre la flèche 47. On reconstitue ainsi pour le trafic lent une configuration en anneau.

On comprend de la description qui précède que le trafic rapide est restauré grâce aux mécanismes de la SDH dans le multiplexeur 30; le trafic lent est d'abord préempté pour permettre la restauration du trafic rapide, puis est restauré après la commutation de fibre dans l'unité de branchement grâce aux mécanismes de la SDH dans les multiplexeurs42 et 46. Le temps de restauration pour le trafic lent est de ce fait plus long que le temps nécessaire à la restauration du trafic rapide, ce qui explique les qualificatifs rapide et lent. A titre d'exemple, on peut obtenir une restauration du trafic rapide en une durée de l'ordre de 50 ms. La commutation de câble dans l'unité de branchement peut être une commutation automatique ou une commutation sur intervention d'un opérateur, sur analyse des alarmes fournies par les équipements. Une durée de restauration du trafic lent de l'ordre de quelques quelques dizaines de secondes à quelques minutes est possible cette durée dépend en fait du temps de réaction de l'opérateur qui surveille le réseau pour faire commuter l'unité de branchement, dans le cas où l'on n'autorise pas de basculement automatique de l'unité de branchement. Dans ce cas, la durée de commutation automatique de l'equipement de réseau SDH est négligeable devant le temps de réaction de l'opérateur.

Dans les modes de réalisation des figures 2 et 3, les ADM SDH 30, 42 et 46 peuvent être configurés en mode MSP 1 +1 ("multiplex section protecting", protection de section en multiplex) pour assurer le basculement décrit plus haut. Le trafic lent peut être configuré en mode SNC-P ("sub-network connection protection" ou protection de connexion de sous-réseaux) pour assurer un reroutage automatique du trafic lors de la commutation de l'unité de branchement.

Bien entendu, la présente invention n'est pas limitée aux exemples et modes de réalisation décrits et représentés, mais elle est susceptible de nombreuses variantes accessibles à l'homme de l'art. Ainsi, dans le mode de réalisation des figures 1 à 3, on utilise dans les multiplexeurs 30, 42 et 43 les mécanismes SDH. Il est clair que l'invention s'applique indépendamment de ces mécanismes, et que le routage du trafic lent comme du trafic rapide peut s'opérer suivant d'autres mécanismes. On pourrait aussi utiliser en lieu et place des ADM proposés d'autres types de dispositifs de commutation. Il est clair aussi que les équipements 18 et 19 d'une part ou 20 et 21 d'autre part pourraient être confondus; il s'agirait toujours fonctionnellement d'équipements distincts, dans la mesure où chacun serait toujours relié à une paire de câble.

## Revendications

1. Un réseau sous-marin de transmission par fibres optique, comprenant un câble unique (1) avec au moins deux paires de fibres et ayant à chaque extrémité une unité de branchement (6, 8), chaque unité de branchement étant reliée à des équipements terminaux (18-21, 22-25) par deux sections de câble (10, 12, 14, 16) ayant chacune au moins deux paires de fibres, chaque unité de branchement commutant les paires de fibres du câble unique vers deux paires de fibres des deux sections de câble qui lui sont reliées.

2. Le réseau de la revendication 1, **caractérisé en ce que** chaque équipement terminal est relié à une paire de fibre, **en ce qu'**il présente, du côté d'une extrémité du câble unique, un multiplexeur (30) relié par une paire de fibres (32, 33) à un équipement terminal (18) d'une section de câble (10), et par une autre paire de fibres (34, 35) à un équipement terminal (21) de l'autre section de câble (12).

3. Le réseau de la revendication 2, **caractérisé en ce que** le multiplexeur présente quatre accès.

4. Le réseau de la revendication 2 ou 3, **caractérisé en ce que** le multiplexeur (30) est un multiplexeur d'injection et d'extraction à hiérarchie numérique synchrone.

5. Le réseau de la revendication 2 ou 3, **caractérisé en ce en ce qu'**il présente, du côté d'une extrémité du câble unique, un deuxième multiplexeur (42) relié par une fibre à un autre équipement terminal (19) d'une section de câble (10), par une autre fibre à un équipement terminal (21) de l'autre section de câble (12) et par une fibre à un accès du dit multiplexeur (30).

6. Le réseau de la revendication 5, **caractérisé en ce que** le deuxième multiplexeur (42) est un multiplexeur d'injection et d'extraction à hiérarchie numérique synchrone.

7. Le réseau de la revendication 5 ou 6, **caractérisé en ce en ce qu'**il présente, du côté d'une extrémité du câble unique, un troisième multiplexeur (46) relié par une fibre à un autre équipement terminal (19) d'une section de câble (10), par une autre fibre à un équipement terminal (21) de l'autre section de câble (12) et par une fibre à un autre accès du dit multiplexeur (30).

8. Le réseau de la revendication 7, **caractérisé en ce que** le troisième multiplexeur (46) est un multiplexeur d'injection et d'extraction à hiérarchie numérique synchrone.

9. Un procédé de transmission dans un réseau selon l'une des revendications 2 à 8, comprenant, d'un côté du câble unique,
- la transmission d'un trafic à restauration rapide depuis un accès du multiplexeur (30) à travers un équipement terminal (18), une section de câble (10), une unité de branchement (6) vers le câble unique, et
- la réception d'un trafic à restauration rapide sur un accès du multiplexeur (30) depuis le câble unique à travers l'unité de branchement (6), l'autre section de câble (12) et un équipement terminal (21).

10. Le procédé de la revendication 9, comprenant, d'un côté du câble unique,
- la transmission d'un trafic à restauration lente depuis un accès du deuxième multiplexeur (42) à travers le multiplexeur (30), un équipement terminal (18), une section de câble (10), une unité de branchement (6) vers le câble unique, et
- la réception d'un trafic à restauration lente sur un accès du troisième multiplexeur (46) depuis le câble unique à travers l'unité de branchement (6), l'autre section de câble (12), un équipement terminal (21) et le multiplexeur (30).

11. Le procédé de la revendication 9 ou 10, comprenant, en cas d'incident, d'un côté du câble unique,
- la transmission d'un trafic à restauration rapide depuis un accès du multiplexeur (30) à travers un équipement terminal (18), une section de câble (10), une unité de branchement (6) vers le câble unique, et
- la réception d'un trafic à restauration rapide sur un accès du multiplexeur (30) depuis le câble unique à travers l'unité de branchement (6), la même section de câble (12) et le même équipement terminal (21).

12. Le procédé de la revendication 9 ou 10, comprenant, en cas d'incident, d'un côté du câble unique,
- la transmission d'un trafic à restauration lente depuis un accès du deuxième multiplexeur (42) à travers un équipement terminal (20), une section de câble (12), une unité de branchement (6) vers le câble unique, et
- la réception d'un trafic à restauration lente sur un accès du troisième multiplexeur (46) depuis le câble unique à travers l'unité de branchement (6), la même section de câble (12) et le même équipement terminal (20).
